(19) **Europäisches Patentamt European Patent Office Office européen des brevets**

(11) **EP 3 214 879 B1**

(12) **EUROPEAN PATENT SPECIFICATION**

(45) Date of publication and mention
of the grant of the patent:
**19.06.2019 Bulletin 2019/25**

(51) Int Cl.:
**H04W 88/08** *(2009.01)*  **H04W 56/00** *(2009.01)*
**H04J 3/06** *(2006.01)*

(21) Application number: **15861453.7**

(86) International application number:
**PCT/CN2015/077930**

(22) Date of filing: **30.04.2015**

(87) International publication number:
**WO 2016/078349 (26.05.2016 Gazette 2016/21)**

(54) **DATA TRANSMISSION METHOD, COMMUNICATION DEVICE, AND COMMUNICATION SYSTEM**

DATENÜBERTRAGUNGSVERFAHREN, KOMMUNIKATIONSVORRICHTUNG UND
KOMMUNIKATIONSSYSTEM

PROCÉDÉ DE TRANSMISSION DE DONNÉES, DISPOSITIF DE COMMUNICATION ET SYSTÈME
DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.11.2014 CN 201410668164**

(43) Date of publication of application:
**06.09.2017 Bulletin 2017/36**

(73) Proprietor: **Huawei Technologies Co., Ltd.
Longgang District
Shenzhen, Guangdong 518129 (CN)**

(72) Inventor: **GU, Yang
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 2 173 136      WO-A1-2013/176356
CN-A- 101 247 574      CN-A- 103 404 226
CN-A- 104 507 154      US-A1- 2013 100 948**

EP 3 214 879 B1

**Description**

**TECHNICAL FIELD**

The present invention relates to the field of communications technologies, and specifically, to a data transmission method, a communications device, and a communications system.

**BACKGROUND**

A Common Public Radio Interface (Common Public Radio Interface, CPRI) protocol is used as a specification for an interface between internal radio base station devices, such as radio equipment control (Radio Equipment Control, REC) and radio equipment (Radio Equipment, RE).
The internal radio base station devices such as REC and RE are usually connected in a point-to-point direct connection manner. The existing CPRI protocol is designed particularly for the point-to-point direct connection manner, and a physical layer needs to ensure a strict timing relationship of data transmission.
To meet development requirements of a communications network, in some scenarios, devices such as REC and RE need to be connected by using an Ethernet technology. In the prior art, a frame number and a frame phase of a CPRI data frame cannot be transmitted in Ethernet. Therefore, a timing relationship of data transmission between internal radio base station devices cannot be ensured.
US 2013/100948 discloses methods and apparatuses for maintaining radio network timing synchronization across an asynchronous communication link between a Radio Equipment Controller (REC) and an item of Radio Equipment (RE). An REC-side adaptor sends first and second asynchronous packet flows over the asynchronous communication link, including a downlink packet flow comprising CPRI basic frames and overhead information encapsulated in asynchronous communication link packets, and a synchronization packet flow comprising CPRI clock data. An RE-side adaptor recovers the CPRI clock from the synchronization packet flow, and uses the recovered clock to re-synchronize the downlink data recovered from the downlink packet flow. For the uplink, the RE outputs uplink traffic in a synchronous, CPRI-compliant stream that is then encapsulated for asynchronous transport by the RE-side adaptor. The REC-side adaptor reconstitutes the asynchronously received uplink data as a synchronous, CPRI-compliant stream for input to the REC.
CN 103404226 discloses a method for data transmission that comprises the steps of transforming the first data sent by a first device in the wireless base station system to a second device in the wireless base station system into a first Ethernet report, sending the first Ethernet report to the second device; and/or receiving the second Ethernet report obtained by transforming the second data sent by the second device to the first device, and transforming the second Ethernet report into the second data.

**SUMMARY**

Embodiments of the present invention provide a data transmission method, a communications device, and a communications system, so as to transmit a frame number and a frame phase of a CPRI data frame in Ethernet.
A first aspect of the present invention provides a data transmission method, where the method is used to transmit a frame number and a frame phase of a CPRI data frame in Ethernet, the Ethernet includes a first communications device and a second communications device, both the first communications device and the second communications device run a CPRI protocol, and the method includes: selecting, by the first communications device, a CPRI data frame, and converting a frame number of the selected CPRI data frame into a value of a second; generating a pulse per second signal, where a phase of the pulse per second signal is a frame phase of the selected CPRI data frame, wherein the frame phase of the selected CPRI data frame is a beginning time of the selected CPRI data frame; generating a timestamp according to the pulse per second signal and the value of a second; and sending, to the second communications device, a synchronization message that carries the timestamp, to enable the second communications device to obtain the frame number and the frame phase of the selected CPRI data frame according to the timestamp.
With reference to the first aspect, in a first possible implementation manner, the converting a frame number of the selected CPRI data frame into a value of a second includes: converting the frame number of the selected CPRI data frame into the value of a second according to a formula $SecondCounter = \dfrac{(b \times k - m)}{k - 100 \times m} \times n$, where SecondCounter is the value of a second that is obtained after conversion, n is the frame number of the selected CPRI data frame, n = a×(k-100×m), k is a frame number cycle specified in the CPRI protocol, a, b, k, and m are positive integers, m < k/100, and b > m/k.

With reference to the first aspect or the first possible implementation manner of the first aspect, in a second possible implementation manner, the method further includes: the first communications device is a building baseband unit BBU, and the second communications device is a remote radio unit RRU; or both the first communications device and the second communications device are BBUs.

A second aspect of the present invention provides a data transmission method, where the method is used to transmit a frame number and a frame phase of a Common Public Radio Interface CPRI data frame in Ethernet, the Ethernet includes a first communications device and a second communications device, both the first communications device and the second communications device run a CPRI protocol, and the method includes: receiving, by the second communications device, a synchronization message that carries a timestamp and is sent by the first communications device, where the timestamp is generated according to a frame number and a frame phase of a CPRI data frame selected by the first communications device, wherein the frame phase of the selected CPRI data frame is a beginning time of the selected CPRI data frame; and determining a value of a second and a pulse per second signal that are corresponding to the timestamp, determining the frame number of the selected CPRI data frame according to the value of a second, and determining the frame phase of the selected CPRI data frame according to the pulse per second signal.

With reference to the second aspect, in a first possible implementation manner, the determining the frame number of the selected CPRI data frame according to the value of a second includes: using a formula n = (SecondCounter×100)Mod(k) to calculate the frame number of the CPRI data frame selected by the first communications device, where Mod is a modulo operation symbol, n is the frame number of the CPRI data frame selected by the first communications device, SecondCounter represents the value of a second, and k represents a frame number cycle specified in the CPRI protocol.

With reference to the second aspect or the second possible implementation manner of the first aspect, in a second possible implementation manner, the method further includes: recoding a time t1 indicated by the timestamp, and recording a time t2 for receiving the synchronization message; sending a delay request message to the first communications device, and recording a time t3 for sending the delay request message; receiving a delay response message returned by the first communications device, where the delay response message carries a time t4 for receiving the delay request message by the first communications device, and recording the time t4; and calculating a time offset according to the times t1, t2, t3, and t4, and adjusting a local clock of the second communications device according to the time offset, to synchronize with the first communications device.

A third aspect of the present invention provides a communications device, where the device is used in Ethernet, the Ethernet includes the communications device and another communications device, both the communications device and the another communications device run a Common Public Radio Interface CPRI protocol, and the communications device includes: a processor, configured to select a CPRI data frame, and convert a frame number of the selected CPRI data frame into a value of a second, and further configured to generate a synchronization message; a signal generator, configured to generate a pulse per second signal, where a phase of the pulse per second signal is a frame phase of the selected CPRI data frame, wherein the frame phase of the selected CPRI data frame is a beginning time of the selected CPRI data frame; a timestamp generation circuit, configured to generate a timestamp according to the pulse per second signal and the value of a second, and add the timestamp to the synchronization message; and a transmitter, configured to send, to the second communications device, the synchronization message that carries the timestamp, to enable the second communications device to obtain the frame number and the frame phase of the selected CPRI data frame according to the timestamp.

With reference to the second aspect, in a first possible implementation manner, the processor is specifically configured to convert the frame number of the selected CPRI data frame into the value of a second according to a

formula $\mathrm{Sec\,ondCounter} = \dfrac{(b \times k - m)}{k - 100 \times m} \times n$, where SecondCounter is the value of a second that is obtained after conversion, n is the frame number of the selected CPRI data frame, n = a×(k-100×m), k is a frame number cycle specified in the CPRI protocol, a, b, k, and m are positive integers, m < k/100, and b > m/k.

With reference to the second aspect or the first possible implementation manner of the first aspect, in a second possible implementation manner, the communications device is a building baseband unit BBU, and the another communications device is a remote radio unit RRU; or both the communications device and the another communications device are BBUs.

A fourth aspect of the present invention provides a communications device, where the device is used in Ethernet, the Ethernet includes the communications device and another communications device, both the communications device and the another communications device run a Common Public Radio Interface CPRI protocol, and the communications device includes: a receiver, configured to receive a synchronization message that carries a timestamp and is sent by the another communications device, where the timestamp is generated according to a frame number and a frame phase of a CPRI data frame selected by the another communications device, wherein the frame phase of the selected CPRI data frame is a beginning time of the selected CPRI data frame; and a processor, configured to determine a value of a second and a pulse per second signal that are corresponding to the timestamp, restore the frame number of the selected CPRI data frame according to the value of a second, and determine the frame phase of the selected CPRI data frame according to the pulse per second signal.

With reference to the fourth aspect, in a first possible implementation manner, the processor is specifically configured to use a formula n = (SecondCounter×100)Mod(k) to calculate the frame number of the CPRI data frame selected by the another communications device, where Mod is a modulo operation symbol, n is the frame number of the CPRI data frame selected by the another communications device, SecondCounter represents the value of a second, and k represents a frame number cycle specified in the CPRI protocol.

With reference to the fourth aspect or the first possible implementation manner of the first aspect, in a second possible implementation manner, the device further includes a transmitter and a memory, where the transmitter is configured to send a delay request message to the another communications device; the receiver is further configured to receive a delay response message returned by the another communications device, where the delay response message carries a time t4 for receiving the delay request message by the another communications device; the memory is configured to record a time t1 indicated by the timestamp, record a time t2 for receiving the synchronization message, record a time t3 for sending the delay request message, and record the time t4 carried in the delay response message; and the processor is further configured to calculate a time offset according to the times t1, t2, t3, and t4, and adjust a local clock of the second communications device according to the time offset, to synchronize with the another communications device.

A fifth aspect of the present invention provides an Ethernet communications system, where the system includes a first communications device and a second communications device, both the first communications device and the second communications device run a CPRI protocol, the first communications device is the communications device described in the third aspect of the present invention, and the second communications device is the communications device described in the fourth aspect of the present invention.

It can be learned from above that, the embodiments of the present invention use a technical solution in which a CPRI data frame is selected, a frame number of the selected CPRI data frame is converted into a value of a second, a corresponding pulse per second signal is generated by using a frame phase of the selected CPRI data frame as a phase of the pulse per second signal, a timestamp is generated according to the pulse per second signal and the value of a second, and a synchronization message that carries the timestamp is sent.

Therefore, a first communications device may send a timestamp that carries frame number and frame phase information to a second communications device, and the second communications device may restore a frame number and a frame phase of a corresponding CPRI data frame according to the received timestamp, so as to resolve a prior-art technical problem that a frame number and a frame phase of a CPRI data frame cannot be transmitted in Ethernet. Further, the second communications device may synchronize with the first communications device based on the transmitted frame number and frame phase, to ensure a timing relationship of data transmission between internal radio base station devices.

## BRIEF DESCRIPTION OF DRAWINGS

To describe the technical solutions in the embodiments of the present invention more clearly, the following briefly introduces the accompanying drawings required for describing the embodiments and the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a data transmission method according to Embodiment 1 of the present invention;
FIG. 2 is a schematic diagram of a time synchronization method;
FIG. 3 is a schematic diagram of a data transmission method according to Embodiment 2 of the present invention;
FIG. 4 is a schematic diagram of another data transmission method according to Embodiment 2 of the present invention;
FIG. 5 is a schematic diagram of a communications device according to Embodiment 3 of the present invention;
FIG. 6a is a schematic diagram of a communications device according to Embodiment 4 of the present invention; and
FIG. 6b is a schematic diagram of another communications device according to Embodiment 4 of the present invention.

## DESCRIPTION OF EMBODIMENTS

Embodiments of the present invention provide a data transmission method, used to transmit a frame number and a frame phase of a CPRI data frame in Ethernet. The embodiments of the present invention further provide a related communications device and system.

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions in the embodiments of the present invention are used inside a radio base station. In the embodiments of the present invention, internal radio base station devices, such as REC and RE, or REC and REC, or RE and RE, are connected by using an Ethernet technology.

The Ethernet technology is a baseband local area network specification. The Ethernet is operated on multiple types of cables by using a CSMA/CD (Carrier Sense Multiple Access/Collision Detection, carrier sense multiple access/collision detection) technology. An Ethernet physical layer protocol based on a packet switching technology has no fixed timeslot cycle. A time between one data packet and another data packet in the Ethernet is not fixed. Therefore, a strict timing relationship cannot be ensured in data transmission by using the Ethernet technology.

Optionally, the REC described in the embodiments of the present invention may be specifically a BBU (Building Base band Unite, building baseband unit), and the RE may be specifically an RRU (Radio Remote Unit, remote radio unit).

In the embodiments of the present invention, both the REC and the RE devices run the CPRI protocol and use the CPRI protocol as an interface specification. A data frame specified in the CPRI protocol (a CPRI data frame for short) has a fixed frame length (such as 10 milliseconds), and interval lengths between adjacent data frames are also the same. The CPRI data frame has an attribute, such as a frame number or a frame phase. The frame number is a number of a data frame, and is periodic. A frame number cycle is defined in the CPRI protocol. The frame phase may also be referred to as frame timing, and is used to represent a beginning time of a data frame. A time domain location of each CPRI data frame can be identified according to a frame number and a frame phase of each CPRI data frame.

In the embodiments of the present invention, when one side device, such as REC or RE, inside the radio base station needs to send a CPRI data frame to another side device, that is, corresponding RE or REC, the one side device needs to convert the to-be-sent CPRI data frame into an Ethernet data packet, and then send the Ethernet data packet to the another side device by using Ethernet connection. The another side device reconverts the received Ethernet data packet into the CPRI data frame. The another side device needs to learn of one or more frame numbers and frame phases of one or more CPRI data frames to synchronize the two side devices, and the one or more frame phases of the one or more CPRI data frames indicated by the obtained one or more frame numbers are used as a time standard. Therefore, the embodiments of the present invention provide a technical solution for transmitting a frame number and a frame phase of a CPRI data frame in Ethernet.

In the following, the technical solutions of the present invention are separately described in detail with reference to specific embodiments.

**Embodiment 1**

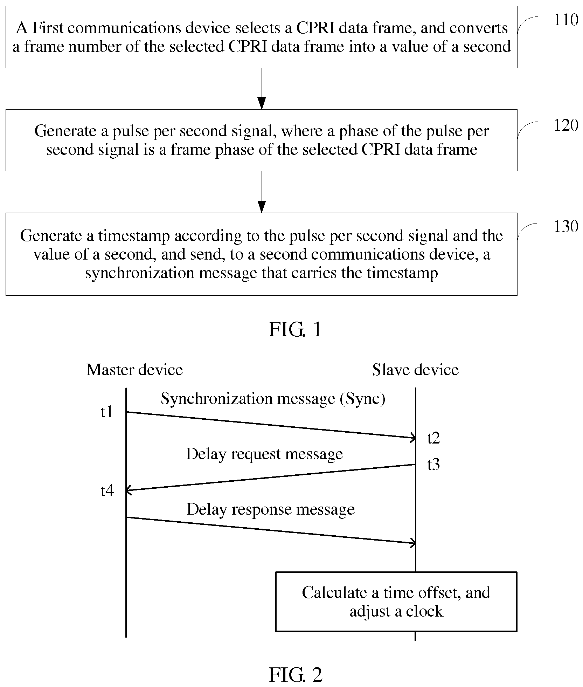

Referring to FIG. 1, an embodiment of the present invention provides a data transmission method. The method is used to transmit a frame number and a frame phase of a CPRI data frame in Ethernet. The Ethernet includes a first communications device and a second communications device, and both the first communications device and the second communications device run a CPRI protocol.

The method may include the following steps.

110. The first communications device selects a CPRI data frame, and converts a frame number of the selected CPRI data frame into a value of a second.

In this embodiment of the present invention, the first communications device (such as REC or RE) and the second communications device (such as REC or RE) are connected by using an Ethernet technology. When the first communications device needs to send a CPRI data frame to the second communications device, the first communications device needs to convert the to-be-sent CPRI data frame into an Ethernet data packet, and then send the Ethernet data packet to the second communications device by using the Ethernet connection. After receiving the Ethernet data packet, the second communications device needs to convert the Ethernet data packet to restore the CPRI data frame. The second communications device needs to obtain a frame number and a frame phase of at least one CPRI data frame to synchronize the two side devices, and the frame phase of the CPRI data frame indicated by the obtained frame number is used as a time standard.

A frame number cycle of a CPRI data frame is specified in the CPRI protocol. Frame numbers of each cycle are successively 1, 2, ... k, where k is a positive integer, such as 4096. The first communications device needs to transmit a frame number and a frame phase of only one data frame in each cycle to the second communications device, so that the second communications device can locate all CPRI data frames in the whole frame number cycle on the basis of the frame number and the frame phase of the data frame.

In this embodiment of the present invention, a frame number and a frame phase of a CPRI data frame are transmitted by using a time synchronization technology. The frame number is transmitted by converting the frame number into a value of a second. In this embodiment of the present invention, a conversion algorithm may be preset in the first communications device. The first communications device may preselect a CPRI data frame according to the preset conversion algorithm, such as a CPRI data frame whose frame number is n, where n is a positive integer, and the frame number n is converted into a corresponding value of a second. How to select a CPRI data frame may be determined according to the preset conversion algorithm. Different conversion algorithms need to select different frame numbers.

120. Generate a pulse per second signal, where a phase of the pulse per second signal is a frame phase of the selected CPRI data frame.

In this embodiment of the present invention, the frame phase of the CPRI data frame is converted into the phase of the pulse per second signal, to transmit the frame phase of the CPRI data frame by using the time synchronization technology. After converting the selected frame number into the value of a second, the first communications device may generate a pulse per second signal corresponding to the value of a second. The pulse per second signal is a pulse signal once per second, that is, a 1PPS (pulse per second, 1pps = 1 Hz = 1 time/second) signal. In this embodiment of the present invention, the frame phase of the CPRI data frame corresponding to the value of a second is directly used as the phase of the pulse per second signal. The frame phase refers to a beginning time of the CPRI data frame. The phase of the pulse per second signal refers to a beginning time of the pulse per second signal. That is, the beginning time of the pulse per second signal is the same as the beginning time of the frame corresponding to the value of a second.

130. Generate a timestamp according to the pulse per second signal and the value of a second, and send, to the second communications device, a synchronization message that carries the timestamp, to enable the second communications device to obtain the frame number and the frame phase of the selected CPRI data frame according to the timestamp.

In this embodiment of the present invention, the first communications device may generate the timestamp according to the pulse per second signal and the value of a second by using the time synchronization technology. The timestamp information carries the value of a second and the phase of the pulse per second signal. A second is used as a unit, an integer part of the timestamp is used to indicate the value of a second, and a decimal part is used to indicate the phase of the pulse per second signal.

For example, the first communications device may perform frequency multiplication on the pulse per second signal to obtain a high frequency clock signal, such as a high frequency clock signal of a 1 KHz, a 1 MHz, or a higher frequency, and use the high frequency clock signal as a standard. That is, a timer records a time according to a frequency of the high frequency clock signal, such as once every nanosecond. The first communications device may randomly select a count value for generating a timestamp, such as 15 seconds 12 nanoseconds, where 15 seconds indicates a value of a second, and 12 nanoseconds may be used to indicate a second phase. A second phase is a frame phase. The first communications device may send a synchronization message (Sync message) that carries the generated timestamp to the second communications device.

After receiving the synchronization message that carries the timestamp, the second communications device can determine the value of a second and the pulse per second signal that are corresponding to the timestamp, then obtain, by means of conversion, the frame number of the corresponding frame according to the value of a second, and determine the frame phase of the CPRI data frame according to the pulse per second signal.

Optionally, in some embodiments of the present invention, step 110 of the converting a frame number of the selected CPRI data frame into a value of a second may include:

converting the frame number of the selected CPRI data frame into the value of a second according to a conversion algorithm indicated in the following formula (1):

$$\mathrm{SecondCounter} = \frac{(b \times k - m)}{k - 100 \times m} \times n \qquad (1),$$

where SecondCounter is the value of a second that is obtained after conversion, n is the frame number of the CPRI data frame selected by the first communications device, $n = a \times (k - 100 \times m)$, k is a frame number cycle specified in the CPRI protocol, a, b, k, and m are positive integers, $m < k/100$, and $b > m/k$.

For example, it is assumed that k = 4096, m = 40, b = 1, a = 1, and n = 96, so that an obtained value of a second is:

$$SecondCoun\,ter = \frac{(1 \times 4096 - 40)}{4096 - 100 \times 40} \times 96 = 4056\,.$$

The timestamp sent by the first communications device to the second communications device is 4056 seconds plus several nanoseconds (such as 4056 seconds 37 nanoseconds). After receiving the timestamp sent by the first communications device, the second communications device determines a corresponding value of a second, such as 4056, and then restores a corresponding frame number (the frame number of the CPRI data frame selected by the first communications device) according to a formula (2):

$$n = (SecondCounter \times 100)Mod(k) \quad (2),$$

where Mod is a modulo operation symbol, n indicates the frame number of the CPRI data frame selected by the first communications device, SecondCounter indicates the value of a second, and k is a frame number cycle specified in the CPRI protocol.

SecondCounter = 4056 is used as an example, and the frame number n is calculated as follows:

$$n = (4056 \times 100)Mod(4096) = 96\,.$$

The following further explains the foregoing algorithms. The formula (1) may be changed into:

$$
\begin{aligned}
Sec\,ondCounter &= \frac{(b \times k - m)}{k - 100 \times m} \times n = a \times (b \times k - m)\\
&= \frac{100 \times a \times b \times k - a \times 100 \times m}{100}\\
&= \frac{100 \times a \times b \times k - a \times k + a \times (k - 100 \times m)}{100}\\
&= \frac{100 \times a \times b \times k - a \times k}{100} + \frac{n}{100}
\end{aligned}
$$

It is easily learned from the foregoing formula that, the left term $\dfrac{100 \times a \times b \times k - a \times k}{100}$ is multiplied by 100 and then divided by k, to obtain an integer 100×a×b-a, and the right term $\dfrac{n}{100}$ is multiplied by 100 and then divided by k, to obtain a remainder n.

It should be noted that, the foregoing conversion algorithm is just an example of the present invention, and other conversion algorithms may be used for other implementation manners.

In this embodiment, after obtaining the timestamp that is transmitted by the first communications device and is used to indicate the frame number and the frame phase, the second communications device may continue to perform a time synchronization procedure, and further determine a time offset between the second communications device and the first communications device, to synchronize the two side communications devices.

Referring to FIG. 2, the time synchronization technology may include the following:

A master node (Master) device generates a value of a second (such as 15 seconds) and a corresponding pulse per second signal (a 1PPS signal) according to a local clock (Master clock), generates a high frequency clock signal according to the pulse per second signal, and generates a timestamp (such as 15 seconds 10 nanoseconds) according to the value of a second and the pulse per second signal and by using the high frequency clock signal as a standard. The timestamp may be used to indicate the value of a second (such as the 15 seconds of the 15 seconds 10 nanoseconds) and a second phase (such as the 10 nanoseconds of the 15 seconds 10 nanoseconds). The second phase may be used to indicate a beginning time of a one-second time length indicated by the value of a second.

The master device sends a synchronization message (Sync message) that carries the timestamp to a slave node (Slave) device. It is assumed that a time indicated by the timestamp is t1.

The slave device receives the synchronization message, obtains the time t1, and records a time t2 for receiving the synchronization message.

The slave device then sends a delay request (Delay_Req) message to the master device, and records a time t3 for sending the Delay_Req message.

The master device receives the Delay_Req message, records a time t4 for receiving the Delay_Resp message, and returns a delay response (Delay_Resp) message that carries the time t4 to the slave device.

The slave device receives the Delay_Resp message, and obtains the time t4 carried in the Delay_Resp message.

The slave device calculates a time offset and a transmission delay Delay according to the times t1, t2, t3, and t4, where a calculation formula is:

$$t2 - t1 = \text{Delay} + \text{Offset}$$

$$t4 - t3 = \text{Delay} - \text{Offset}.$$

The slave device may continually adjust a local clock (Slave clock) according to one or more time offsets Offsets calculated for one or more times. Finally, the Offset is converged to close to 0, and time synchronization between the slave device and the master device is implemented.

In this embodiment of the present invention, it is assumed that a time t1 is indicated by the timestamp carried in the synchronization message sent by the first communications device. The foregoing method after step 130 may further include the following steps.

The second communications device records a time t2 for receiving the synchronization message.

Then, the second communications device may send a delay request message to the first communications device, and record a time t3 for sending the delay request message.

The first communications device records a time t4 for receiving the delay request message, and sends a delay response message to the second communications device. The delay response message carries the time t4 for receiving the delay request message by the first communications device.

Therefore, the second communications device calculates a time offset according to the times t1, t2, t3, and t4, and adjusts a local clock of the second communications device according to the time offset, to synchronize with the first communications device and ensure a timing relationship of data transmission between the first communications device and the second communications device.

It may be understood that, the foregoing solution in this embodiment of the present invention may be specifically implemented in devices such as REC and RE. Specifically, the first communications device may be REC, and the second communications device may be REC or RE; or the first communications device may be RE, and the second communications device may be REC or RE. The REC may be specifically a BBU, and the RE may be specifically an RRU.

It can be learned from above that, this embodiment of the present invention uses a technical solution in which a CPRI data frame is selected, a frame number of the selected CPRI data frame is converted into a value of a second, a corresponding pulse per second signal is generated by using a frame phase of the selected CPRI data frame as a phase of the pulse per second signal, a timestamp is generated according to the pulse per second signal and the value of a second, and a synchronization message that carries the timestamp is sent.

Therefore, a first communications device may send a timestamp that carries frame number and frame phase information to a second communications device, and the second communications device may restore a frame number and a phase of a corresponding CPRI data frame according to the received timestamp, so as to resolve a prior-art technical problem that a frame number and a frame phase of a CPRI data frame cannot be transmitted in Ethernet. Further, the second communications device may synchronize with the first communications device based on the transmitted frame number and frame phase, to ensure a timing relationship of data transmission between internal radio base station devices.

**Embodiment 2**

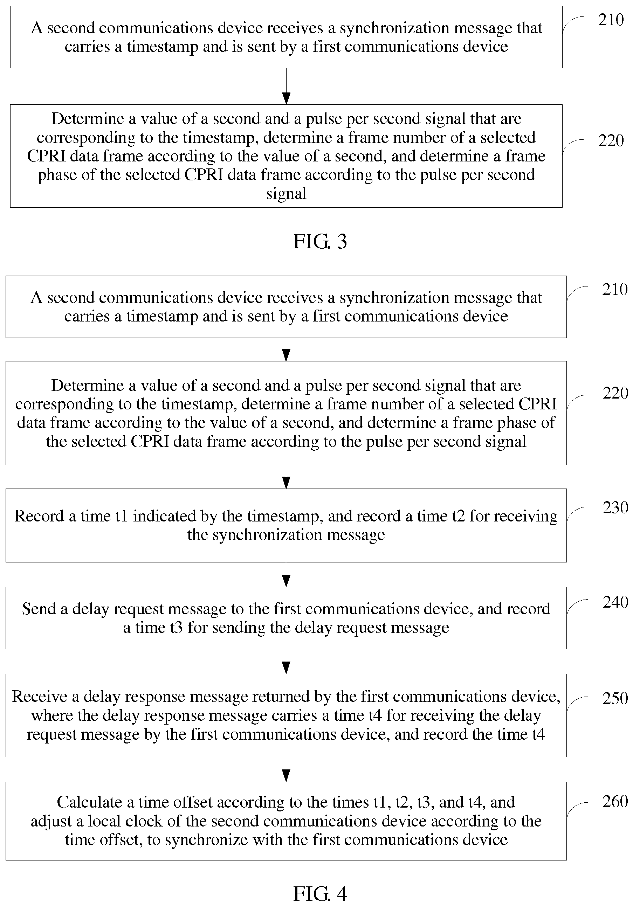

Referring to FIG. 3, an embodiment of the present invention provides another data transmission method. The method is used to transmit a frame number and a frame phase of a CPRI data frame in Ethernet. The Ethernet includes a first communications device and a second communications device, and both the first communications device and the second communications device run a CPRI protocol. The method may include the following steps.

210. The second communications device receives a synchronization message that carries a timestamp and is sent by the first communications device.

The timestamp is generated according to a frame number and a phase of a CPRI data frame selected by the first communications device. For detailed descriptions, refer to Embodiment 1.

220. Determine a value of a second and a pulse per second signal that are corresponding to the timestamp, determine a frame number of the selected CPRI data frame according to the value of a second, and determine a frame phase of the selected CPRI data frame according to the pulse per second signal.

In some embodiments of the present invention, step 220 of the determining a frame number of the selected CPRI data frame according to the value of a second includes:

using a formula $n = (SecondCounter \times 100)Mod(k)$ to calculate the frame number of the CPRI data frame selected by the first communications device, where

Mod is a modulo operation symbol, n is the frame number of the CPRI data frame selected by the first communications device, SecondCounter indicates the value of a second, and k is a frame number cycle specified in the CPRI protocol.

In the foregoing, the first communications device sends, to the second communication device, the synchronization message that carries the timestamp, that is, the frame number and the frame phase are transmitted. Subsequently, a time synchronization procedure may be continuously performed, to synchronize the first communications device and the second communications device, and ensure a timing relationship of data transmission between internal radio base station devices.

Referring to FIG. 4, in some embodiments of the present invention, the method may further include the following steps:

230. Record a time t1 indicated by the timestamp, and record a time t2 for receiving the synchronization message.
240. Send a delay request message to the first communications device, and record a time t3 for sending the delay request message.
250. Receive a delay response message returned by the first communications device, where the delay response message carries a time t4 for receiving the delay request message by the first communications device, and record the time t4.
260. Calculate a time offset according to the times t1, t2, t3, and t4, and adjust a local clock of the second communications device according to the time offset, to synchronize with the first communications device.

For more detailed descriptions of the method in this embodiment of the present invention, refer to Embodiment 1.

It can be learned from above that, this embodiment of the present invention uses a technical solution in which a CPRI data frame is selected, a frame number of the selected CPRI data frame is converted into a value of a second, a corresponding pulse per second signal is generated by using a frame phase of the selected CPRI data frame as a phase of the pulse per second signal, a timestamp is generated according to the pulse per second signal and the value of a second, and a synchronization message that carries the timestamp is sent.

Therefore, a first communications device may send a timestamp that carries frame number and frame phase information to a second communications device, and the second communications device may restore a frame number and a phase of a corresponding CPRI data frame according to the received timestamp, so as to resolve a prior-art technical problem that a frame number and a frame phase of a CPRI data frame cannot be transmitted in Ethernet. Further, the second communications device may synchronize with the first communications device based on the transmitted frame number and frame phase, to ensure a timing relationship of data transmission between internal radio base station devices.

To better implement the foregoing solutions in the embodiments of the present invention, related apparatuses used to cooperatively implement the foregoing solutions are further provided in the following.

**Embodiment 3**

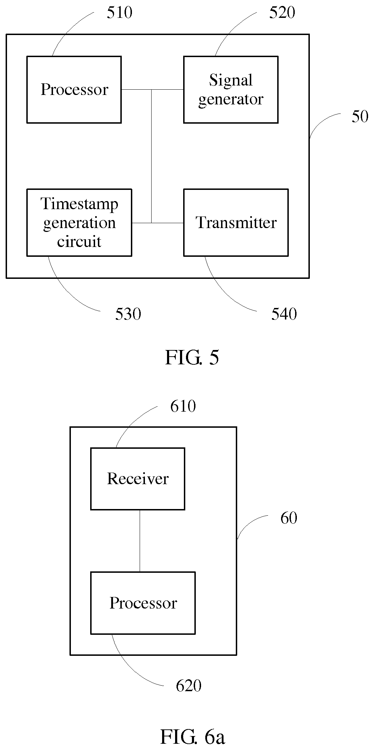

Referring to FIG. 5, an embodiment of the present invention provides a communications device 50. The device is used in Ethernet, and the Ethernet includes the communications device and another communications device. Both the communications device and the another communications device run a CPRI protocol. The communications device may include:

a processor 510, configured to select a CPRI data frame, and convert a frame number of the selected CPRI data frame into a value of a second, and further configured to generate a synchronization message;

a signal generator 520, configured to generate a pulse per second signal, where a phase of the pulse per second signal is a frame phase of the selected CPRI data frame;

a timestamp generation circuit 530, configured to generate a timestamp according to the pulse per second signal and the value of a second, and add the timestamp to the synchronization message; and

a transmitter 540, configured to send, to the second communications device, the synchronization message that carries the timestamp, to enable the second communications device to obtain the frame number and the frame phase of the selected CPRI data frame according to the timestamp.

In some embodiments of the present invention, the processor 510 is specifically configured to convert the frame number of the selected CPRI data frame into the value of a second according to a formula

$$\mathrm{SecondCounter} = \frac{(b \times k - m)}{k - 100 \times m} \times n$$

where SecondCounter is the value of a second that is obtained after conversion, n is the frame number of the selected CPRI data frame, n = a×(k-100×m), k is a frame number cycle specified in the CPRI protocol, a, b, k, and m are positive integers, m < k/100, and b > m/k.

In some embodiment of the present invention, the communications device is a building baseband unit BBU, and the another communications device is a remote radio unit RRU; or both the communications device and the another communications device are BBUs.

It may be understood that, functions of function modules of the communications device in this embodiment of the present invention may be specifically implemented according to the methods in the foregoing method embodiments. For a specific implementation process of the functions, refer to related descriptions of the foregoing method embodiments. Details are not described herein again.

It can be learned from above that, this embodiment of the present invention uses a technical solution in which a CPRI data frame is selected, a frame number of the selected CPRI data frame is converted into a value of a second, a corresponding pulse per second signal is generated by using a frame phase of the selected CPRI data frame as a phase of the pulse per second signal, a timestamp is generated according to the pulse per second signal and the value of a second, and a synchronization message that carries the timestamp is sent.

Therefore, a first communications device may send a timestamp that carries frame number and frame phase information to a second communications device, and the second communications device may restore a frame number and a phase of a corresponding CPRI data frame according to the received timestamp, so as to resolve a prior-art technical problem that a frame number and a frame phase of a CPRI data frame cannot be transmitted in Ethernet. Further, the second communications device may synchronize with the first communications device based on the transmitted frame number and frame phase, to ensure a timing relationship of data transmission between internal radio base station devices.

**Embodiment 4**

Referring to FIG. 6a, an embodiment of the present invention provides a communications device 60. The device is used in Ethernet, and the Ethernet includes the communications device and another communications device. Both the communications device and the another communications device run a Common Public Radio Interface CPRI protocol. The communications device may include:

a receiver 610, configured to receive a synchronization message that carries a timestamp and is sent by the another communications device, where the timestamp is generated according to a frame number and a frame phase of a CPRI data frame selected by the another communications device; and

a processor 620, configured to determine a value of a second and a pulse per second signal that are corresponding to the timestamp, restore the frame number of the selected CPRI data frame according to the value of a second, and determine the frame phase of the selected CPRI data frame according to the pulse per second signal.

In some embodiments of the present invention, the processor 620 is specifically configured to use a formula n = (SecondCounter×100)Mod(k) to calculate the frame number of the CPRI data frame selected by the another communications device, where Mod is a modulo operation symbol, n is the frame number of the CPRI data frame selected by the another communications device, SecondCounter represents the value of a second, and k represents a frame number cycle specified in the CPRI protocol.

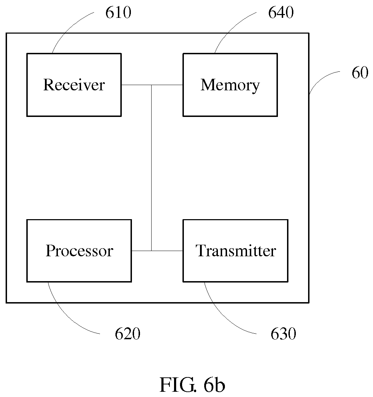

Referring to FIG. 6b, in some embodiments of the present invention, the communications device may further include:

a transmitter 630 and a memory 640.

The transmitter 630 is configured to send a delay request message to the another communications device.

The receiver 610 is further configured to receive a delay response message returned by the another communications device, and the delay response message carries a time t4 for receiving the delay request message by the another communications device.

The memory 640 is configured to record a time t1 indicated by the timestamp, record a time t2 for receiving the synchronization message, record a time t3 for sending the delay request message, and record the time t4 carried in the delay response message.

The processor 620 is further configured to calculate a time offset according to the times t1, t2, t3, and t4, and adjust a local clock of the second communications device according to the time offset, to synchronize with the another communications device.

The communications device in this embodiment of the present invention may be an REC device or an RE device.

It may be understood that, functions of function modules of the communications device in this embodiment of the present invention may be specifically implemented according to the methods in the foregoing method embodiments. For a specific implementation process of the functions, refer to related descriptions of the foregoing method embodiments. Details are not described herein again.

It can be learned from above that, this embodiment of the present invention uses a technical solution in which a CPRI data frame is selected, a frame number of the selected CPRI data frame is converted into a value of a second, a corresponding pulse per second signal is generated by using a frame phase of the selected CPRI data frame as a phase of the pulse per second signal, a timestamp is generated according to the pulse per second signal and the value of a second, and a synchronization message that carries the timestamp is sent.

Therefore, a first communications device may send a timestamp that carries frame number and frame phase information to a second communications device, and the second communications device may restore a frame number and a phase of a corresponding CPRI data frame according to the received timestamp, so as to resolve a prior-art technical problem that a frame number and a frame phase of a CPRI data frame cannot be transmitted in Ethernet. Further, the second communications device may synchronize with the first communications device based on the transmitted frame number and frame phase, to ensure a timing relationship of data transmission between internal radio base station devices.

An embodiment of the present invention further provides a computer storage medium. The computer storage medium can store a program, and the program performs some or all of steps of a method for transmitting frame information in Ethernet that are recorded in the foregoing method embodiments.

An embodiment of the present invention further provides an Ethernet system. The system includes a first communications device and a second communications device. Both the first communications device and the second communications device run a CPRI protocol. The first communications device is the communications device described in Embodiment 3 of the present invention, and the second communications device is the communications device described in Embodiment 4 of the present invention.

In the foregoing embodiments, the description of each embodiment has respective focuses. For a part that is not described in detail in an embodiment, refer to related descriptions in other embodiments.

It should be noted that, for ease of description, the foregoing method embodiments are described as a series of action combinations. However, a person skilled in the art should understand that the present invention is not limited to the described sequence of the actions, because some steps may be performed in another sequence or performed at the same time according to the present invention. In addition, a person skilled in the art should also appreciate that all the embodiments described in the specification are examples of embodiments, and the related actions and modules are not necessarily mandatory to the present invention.

A person of ordinary skill in the art may understand that all or a part of the steps of the methods in the embodiments may be implemented by a program instructing relevant hardware. The program may be stored in a computer readable storage medium. The storage medium may include: a ROM, a RAM, a magnetic disk, or an optical disc.

The foregoing describes in detail a data transmission method and a communications device that are provided in the embodiments of the present invention. In this specification, specific examples are used to describe the principle and implementation manners of the present invention, and the description of the embodiments is only intended to help understand the method and core idea of the present invention. In addition, a person of ordinary skill in the art may, based on the idea of the present invention, make modifications with respect to the specific implementation manners and the application scope. Therefore, the content of this specification shall not be construed as a limitation to the present invention.

**Claims**

1. A data transmission method, wherein the method is used to transmit a frame number and a frame phase of a Common Public Radio Interface, CPRI, data frame in Ethernet, the Ethernet comprises a first communications device and a second communications device, both the first communications device and the second communications device run a CPRI protocol, **characterized in that** the method comprises:

   selecting (110), by the first communications device, a CPRI data frame, and converting a frame number of the selected CPRI data frame into a value of a second;
   generating (120), by the first communications device, a pulse per second signal, wherein a phase of the pulse per second signal is a frame phase of the selected CPRI data frame; wherein the frame phase of the selected CPRI data frame is a beginning time of the selected CPRI data frame;
   generating (130), by the first communications device, a timestamp according to the pulse per second signal and the value of a second; and
   sending (130), by the first communications device, to the second communications device, a synchronization message that carries the timestamp, to enable the second communications device to obtain the frame number and the frame phase of the selected CPRI data frame according to the timestamp.

2. The method according to claim 1, wherein the converting a frame number of the selected CPRI data frame into a value of a second comprises:
   converting the frame number of the selected CPRI data frame into the value of a second according to a formula

   $$\mathrm{Sec\,ondCounter} = \frac{(b \times k - m)}{k - 100 \times m} \times n$$  wherein SecondCounter is the value of a second that is obtained after the conversion, n is the frame number of the selected CPRI data frame, n = a×(k-100×m), k is a frame number cycle specified in the CPRI protocol, a, b, k, and m are positive integers, m < k/100, and b > m/k.

3. The method according to claim 1 or 2, wherein
   the first communications device is a building baseband unit, BBU, and the second communications device is a remote radio unit, RRU; or
   both the first communications device and the second communications device are BBUs.

4. A data transmission method, wherein the method is used to transmit a frame number and a frame phase of a Common Public Radio Interface, CPRI, data frame in Ethernet, the Ethernet comprises a first communications device and a second communications device, both the first communications device and the second communications device run a CPRI protocol, **characterized in that** the method comprises:

   receiving (210), by the second communications device, a synchronization message that carries a timestamp and is sent by the first communications device, wherein the timestamp is generated according to a frame number and a frame phase of a CPRI data frame selected by the first communications device; wherein the frame phase of the selected CPRI data frame is a beginning time of the selected CPRI data frame; and
   determining (220), by the second communications device, a value of a second and a pulse per second signal that are corresponding to the timestamp, determining the frame number of the selected CPRI data frame according to the value of a second, and determining the frame phase of the selected CPRI data frame according to the pulse per second signal.

5. The method according to claim 4, wherein the determining the frame number of the selected CPRI data frame according to the value of a second comprises:
   using a formula n = (SecondCounter×100)Mod(k) to calculate the frame number of the CPRI data frame selected by the first communications device, wherein Mod is a modulo operation symbol, n is the frame number of the CPRI data frame selected by the first communications device, SecondCounter represents the value of a second, and k represents a frame number cycle specified in the CPRI protocol.

6. The method according to claim 4 or 5, further comprising:

   recoding (230) a time t1 indicated by the timestamp, and recording a time t2 for receiving the synchronization message;

sending (240) a delay request message to the first communications device, and recording a time t3 for sending the delay request message;

receiving (250) a delay response message returned by the first communications device, wherein the delay response message carries a time t4 for receiving the delay request message by the first communications device, and recording the time t4; and

calculating (260) a time offset according to the times t1, t2, t3, and t4, and adjusting a local clock of the second communications device according to the time offset, to synchronize with the first communications device.

7. A communications device, wherein the device is used in Ethernet, the Ethernet comprises the communications device and another communications device, both the communications device and the another communications device run a Common Public Radio Interface, CPRI, protocol, **characterized in that** the communications device comprises:

a processor (510), configured to select a CPRI data frame, and convert a frame number of the selected CPRI data frame into a value of a second, and further configured to generate a synchronization message;

a signal generator (520), configured to generate a pulse per second signal, wherein a phase of the pulse per second signal is a frame phase of the selected CPRI data frame; wherein the frame phase of the selected CPRI data frame is a beginning time of the selected CPRI data frame;

a timestamp generation circuit (530), configured to generate a timestamp according to the pulse per second signal and the value of a second, and add the timestamp to the synchronization message; and

a transmitter (540), configured to send, to the second communications device, the synchronization message that carries the timestamp, to enable the second communications device to obtain the frame number and the frame phase of the selected CPRI data frame according to the timestamp.

8. The communications device according to claim 7, wherein

the processor (510) is specifically configured to convert the frame number of the selected CPRI data frame into the value of a second according to a formula $SecondCounter = \dfrac{(b \times k - m)}{k - 100 \times m} \times n$ wherein Second-

Counter is the value of a second that is obtained after conversion, n is the frame number of the selected CPRI data frame, n = a×(k-100×m), k is a frame number cycle specified in the CPRI protocol, a, b, k, and m are positive integers, m < k/100, and b > m/k.

9. The communications device according to claim 7 or 8, wherein

the communications device is a building baseband unit, BBU, and the another communications device is a remote radio unit, RRU; or

both the communications device and the another communications device are BBUs.

10. A communications device, wherein the device is used in Ethernet, the Ethernet comprises the communications device and another communications device, both the communications device and the another communications device run a Common Public Radio Interface, CPRI, protocol, **characterized in that** the communications device comprises:

a receiver (610), configured to receive a synchronization message that carries a timestamp and is sent by the another communications device, wherein the timestamp is generated according to a frame number and a frame phase of a CPRI data frame selected by the another communications device; wherein the frame phase of the selected CPRI data frame is a beginning time of the selected CPRI data frame; and

a processor (620), configured to determine a value of a second and a pulse per second signal that are corresponding to the timestamp, restore the frame number of the selected CPRI data frame according to the value of a second, and determine the frame phase of the selected CPRI data frame according to the pulse per second signal.

11. The communications device according to claim 10, wherein

the processor (620) is specifically configured to use a formula n = (SecondCounter×100)Mod(k) to calculate the frame number of the CPRI data frame selected by the another communications device, wherein Mod is a modulo operation symbol, n is the frame number of the CPRI data frame selected by the another communications device, SecondCounter represents the value of a second, and k represents a frame number cycle specified in the CPRI protocol.

12. The communications device according to claim 10 or 11, further comprising:

a transmitter (630) and a memory (640), wherein
the transmitter (630) is configured to send a delay request message to the another communications device;
the receiver (610) is further configured to receive a delay response message returned by the another communications device, wherein the delay response message carries a time t4 for receiving the delay request message by the another communications device;
the memory (640) is configured to record a time t1 indicated by the timestamp, record a time t2 for receiving the synchronization message, record a time t3 for sending the delay request message, and record the time t4 carried in the delay response message; and
the processor (620) is further configured to calculate a time offset according to the times t1, t2, t3, and t4, and adjust a local clock of the communications device according to the time offset, to synchronize with the another communications device.

13. An Ethernet communications system, wherein the system comprises a first communications device and a second communications device, both the first communications device and the second communications device run a Common Public Radio Interface, CPRI, protocol, **characterized in that** the first communications device is the communications device according to any one of claims 7 to 9, and the second communications device is the communications device according to any one of claims 10 to 12.

**Patentansprüche**

1. Datenübertragungsverfahren, wobei das Verfahren verwendet wird, um eine Rahmennummer und eine Rahmenphase eines CPRI-Datenrahmens (Common Public Radio Interface) in Ethernet zu übertragen, wobei das Ethernet eine erste Kommunikationsvorrichtung und eine zweite Kommunikationsvorrichtung umfasst, wobei sowohl die erste Kommunikationsvorrichtung als auch die zweite Kommunikationsvorrichtung ein CPRI-Protokoll ausführen, **dadurch gekennzeichnet, dass** das Verfahren Folgendes umfasst:

Auswählen (110), durch die erste Kommunikationsvorrichtung, eines CPRI-Datenrahmens, und Umwandeln einer Rahmennummer des ausgewählten CPRI-Datenrahmens in einen Wert einer Sekunde;
Erzeugen (120), durch die erste Kommunikationsvorrichtung, eines Impuls-pro-Sekunde-Signals, wobei eine Phase des Impuls-pro-Sekunde-Signals eine Rahmenphase des ausgewählten CPRI-Datenrahmens ist; wobei die Rahmenphase des ausgewählten CPRI-Datenrahmens eine Beginnzeit des ausgewählten CPRI-Datenrahmens ist;
Erzeugen (130), durch die erste Kommunikationsvorrichtung, eines Zeitstempels entsprechend dem Impuls-pro-Sekunde-Signal und dem Wert einer Sekunde; und
Senden (130), durch die erste Kommunikationsvorrichtung einer Synchronisierungsnachricht an die zweite Kommunikationsvorrichtung, die den Zeitstempel transportiert, um der zweiten Kommunikationsvorrichtung zu ermöglichen, die Rahmennummer und die Rahmenphase des ausgewählten CPRI-Datenrahmens entsprechend dem Zeitstempel zu erhalten.

2. Verfahren nach Anspruch 1, wobei das Umwandeln einer Rahmennummer des ausgewählten CPRI-Datenrahmens in einen Wert einer Sekunde Folgendes umfasst:
Umwandeln der Rahmennummer des ausgewählten CPRI-Datenrahmens in den Wert einer Sekunde gemäß einer Formel $SekundenZähler = \frac{(b \times k - m)}{k - 100 \times m} \times n,$ wobei SekundenZähler der Wert einer Sekunde ist, der nach der Umwandlung erhalten wird, n die Rahmennummer des ausgewählten CPRI-Datenrahmens ist, n = a $\times$ (k - 100 $\times$ m), k ein im CPRI-Protokoll angegebener Rahmennummernzyklus ist, a, b, k und m positive ganze Zahlen sind, m < k/100, und b > m/k.

3. Verfahren nach Anspruch 1 oder 2, wobei:

die erste Kommunikationsvorrichtung eine Gebäude-Basisbandeinheit (BBU, Building Baseband Unit) ist und die zweite Kommunikationsvorrichtung eine abgesetzte Funkeinheit (RRU, Remote Radio Unit) ist; oder

sowohl die erste Kommunikationsvorrichtung als auch die zweite Kommunikationsvorrichtung BBUs sind.

4. Datenübertragungsverfahren, wobei das Verfahren verwendet wird, um eine Rahmennummer und eine Rahmenphase eines CPRI-Datenrahmens (Common Public Radio Interface) in Ethernet zu übertragen, wobei das Ethernet eine erste Kommunikationsvorrichtung und eine zweite Kommunikationsvorrichtung umfasst, wobei sowohl die erste Kommunikationsvorrichtung als auch die zweite Kommunikationsvorrichtung ein CPRI-Protokoll ausführen, **dadurch gekennzeichnet, dass** das Verfahren Folgendes umfasst:

Empfangen (210), durch die zweite Kommunikationsvorrichtung, einer Synchronisierungsnachricht, die einen Zeitstempel transportiert und durch die erste Kommunikationsvorrichtung gesendet wird, wobei der Zeitstempel gemäß einer Rahmennummer und einer Rahmenphase eines durch die erste Kommunikationsvorrichtung ausgewählten CPRI-Datenrahmens erzeugt wird, wobei die Rahmenphase des ausgewählten CPRI-Datenrahmens eine Beginnzeit des ausgewählten CPRI-Datenrahmens ist; und
Bestimmen (220), durch die zweite Kommunikationsvorrichtung, eines Wertes einer Sekunde und eines Impuls-pro-Sekunde-Signals, die dem Zeitstempel entsprechen, Bestimmen der Rahmennummer des ausgewählten CPRI-Datenrahmens gemäß dem Wert einer Sekunde, und Bestimmen der Rahmenphase des ausgewählten CPRI-Datenrahmens gemäß dem Impuls-pro-Sekunde-Signal.

5. Verfahren nach Anspruch 4, wobei das Bestimmen der Rahmennummer des ausgewählten CPRI-Datenrahmens gemäß dem Wert einer Sekunde Folgendes umfasst:
Verwenden einer Formel n = (SekundenZähler × 100)Mod(k) zum Berechnen der Rahmennummer des durch die erste Kommunikationsvorrichtung ausgewählten CPRI-Datenrahmens, wobei Mod ein modulo-Operationssymbol ist, n die Rahmennummer des durch die erste Kommunikationsvorrichtung ausgewählten CPRI-Datenrahmens ist, SekundenZähler den Wert einer Sekunde darstellt, und k einen im CPRI-Protokoll angegebenen Rahmennumernzyklus darstellt.

6. Verfahren nach Anspruch 4 oder 5, das ferner Folgendes umfasst:

Aufzeichnen (230) einer durch den Zeitstempel angezeigten Zeit t1, und Aufzeichnen einer Zeit t2 zum Empfangen der Synchronisierungsnachricht;
Senden (240) einer Verzögerungsanforderungsnachricht an die erste Kommunikationsvorrichtung, und Aufzeichnen einer Zeit t3 zum Senden der Verzögerungsanforderungsnachricht;
Empfangen (250) einer durch die erste Kommunikationsvorrichtung zurückgegebenen Verzögerungsantwortnachricht, wobei die Verzögerungsantwortnachricht eine Zeit t4 zum Empfangen der Verzögerungsanforderungsnachricht durch die erste Kommunikationsvorrichtung transportiert, und Aufzeichnen der Zeit t4; und
Berechnen (260) eines Zeitversatzes gemäß den Zeiten t1, t2, t3 und t4, und Einstellen eines lokalen Takts der zweiten Kommunikationsvorrichtung gemäß dem Zeitversatz zum Synchronisieren mit der ersten Kommunikationsvorrichtung.

7. Kommunikationsvorrichtung, wobei die Vorrichtung in Ethernet verwendet wird, das Ethernet die Kommunikationsvorrichtung und eine andere Kommunikationsvorrichtung umfasst, sowohl die Kommunikationsvorrichtung als auch die andere Kommunikationsvorrichtung ein CPRI-Protokoll (Common Public Radio Interface) ausführen, **dadurch gekennzeichnet, dass** die Kommunikationsvorrichtung Folgendes umfasst:

einen Prozessor (510), dazu ausgelegt, einen CPRI-Datenrahmen auszuwählen und eine Rahmennummer des ausgewählten CPRI-Datenrahmens in einen Wert einer Sekunde umzuwandeln, und ferner dazu ausgelegt, eine Synchronisierungsnachricht zu erzeugen;
einen Signalgenerator (520), dazu ausgelegt, ein Impuls-pro-Sekunde-Signal zu erzeugen, wobei eine Phase des Impuls-pro-Sekunde-Signals eine Rahmenphase des ausgewählten CPRI-Datenrahmens ist; wobei die Rahmenphase des ausgewählten CPRI-Datenrahmens eine Beginnzeit des ausgewählten CPRI-Datenrahmens ist;
eine Zeitstempelerzeugungsschaltung (530), dazu ausgelegt, einen Zeitstempel gemäß dem Impuls-pro-Sekunde-Signal und dem Wert einer Sekunde zu erzeugen und den Zeitstempel zu der Synchronisierungsnachricht hinzuzufügen; und
einen Sender (540), dazu ausgelegt, die Synchronisierungsnachricht an die zweite Kommunikationsvorrichtung zu senden, die den Zeitstempel transportiert, um der zweiten Kommunikationsvorrichtung zu ermöglichen, die Rahmennummer und die Rahmenphase des ausgewählten CPRI-Datenrahmens entsprechend dem Zeitstempel zu erhalten.

8. Kommunikationsvorrichtung nach Anspruch 7, wobei
der Prozessor (510) speziell dazu ausgelegt ist, die Rahmennummer des ausgewählten CPRI-Datenrahmens in den Wert einer Sekunde umzuwandeln, gemäß einer Formel $SekundenZähler = \frac{(b \times k - m)}{k - 100 \times m} \times n,$ wobei SekundenZähler der Wert einer Sekunde ist, der k-100xm nach der Umwandlung erhalten wird, n die Rahmennummer des ausgewählten CPRI-Datenrahmens ist, n = a × (k - 100 × m), k ein im CPRI-Protokoll angegebener Rahmennummernzyklus ist, a, b, k und m positive ganze Zahlen sind, m < k/100, und b > m/k.

9. Kommunikationsvorrichtung nach Anspruch 7 oder 8, wobei
die Kommunikationsvorrichtung eine Gebäude-Basisbandeinheit (BBU, Building Baseband Unit) ist und die andere Kommunikationsvorrichtung eine abgesetzte Funkeinheit (RRU, Remote Radio Unit) ist; oder sowohl die Kommunikationsvorrichtung als auch die andere Kommunikationsvorrichtung BBUs sind.

10. Kommunikationsvorrichtung, wobei die Vorrichtung in Ethernet verwendet wird, das Ethernet die Kommunikationsvorrichtung und eine andere Kommunikationsvorrichtung umfasst, sowohl die Kommunikationsvorrichtung als auch die andere Kommunikationsvorrichtung ein CPRI-Protokoll (Common Public Radio Interface) ausführen, **dadurch gekennzeichnet, dass** die Kommunikationsvorrichtung Folgendes umfasst:

einen Empfänger (610), dazu ausgelegt, eine Synchronisierungsnachricht zu empfangen, die einen Zeitstempel transportiert und durch die andere Kommunikationsvorrichtung gesendet wird, wobei der Zeitstempel gemäß einer Rahmennummer und einer Rahmenphase eines durch die andere Kommunikationsvorrichtung ausgewählten CPRI-Datenrahmens erzeugt wird, wobei die Rahmenphase des ausgewählten CPRI-Datenrahmens eine Beginnzeit des ausgewählten CPRI-Datenrahmens ist; und
einen Prozessor (620), dazu ausgelegt, einen Wert einer Sekunde und ein Impuls-pro-Sekunde-Signal zu bestimmen, die dem Zeitstempel entsprechen, die Rahmennummer des ausgewählten CPRI-Datenrahmens gemäß dem Wert einer Sekunde wiederherzustellen und die Rahmenphase des ausgewählten CPRI-Datenrahmens gemäß dem Impuls-pro-Sekunde-Signal zu bestimmen.

11. Kommunikationsvorrichtung nach Anspruch 10, wobei
der Prozessor (620) speziell dazu ausgelegt ist, eine Formel n = (SekundenZähler × 100)Mod(k) zum Berechnen der Rahmennummer des durch die andere Kommunikationsvorrichtung ausgewählten CPRI-Datenrahmens zu verwenden, wobei Mod ein modulo-Operationssymbol ist, n die Rahmennummer des durch die andere Kommunikationsvorrichtung ausgewählten CPRI-Datenrahmens ist, SekundenZähler den Wert einer Sekunde darstellt, und k einen im CPRI-Protokoll angegebenen Rahmennumernzyklus darstellt.

12. Kommunikationsvorrichtung nach Anspruch 10 oder 11, die ferner Folgendes umfasst:

einen Sender (630) und einen Speicher (640), wobei
der Sender (630) dazu ausgelegt ist, eine Verzögerungsanforderungsnachricht an die andere Kommunikationsvorrichtung zu senden;
der Empfänger (610) ferner dazu ausgelegt ist, eine durch die andere Kommunikationsvorrichtung zurückgegebene Verzögerungsantwortnachricht zu empfangen, wobei die Verzögerungsantwortnachricht eine Zeit t4 zum Empfangen der Verzögerungsanforderungsnachricht durch die andere Kommunikationsvorrichtung transportiert;
der Speicher (640) dazu ausgelegt ist, eine durch den Zeitstempel angezeigte Zeit t1 aufzuzeichnen, eine Zeit t2 zum Empfangen der Synchronisierungsnachricht aufzuzeichnen, eine Zeit t3 zum Senden der Verzögerungsanforderungsnachricht aufzuzeichnen und die in der Verzögerungsantwortnachricht transportierte Zeit t4 aufzuzeichnen; und
der Prozessor (620) ferner dazu ausgelegt ist, einen Zeitversatz gemäß den Zeiten t1, t2, t3 und t4 zu berechnen und einen lokalen Takt der Kommunikationsvorrichtung gemäß dem Zeitversatz zum Synchronisieren mit der anderen Kommunikationsvorrichtung einzustellen.

13. Ethernet-Kommunikationssystem, wobei das System eine erste Kommunikationsvorrichtung und eine zweite Kommunikationsvorrichtung umfasst, wobei sowohl die erste Kommunikationsvorrichtung als auch die zweite Kommunikationsvorrichtung ein CPRI-Protokoll (Common Public Radio Interface) ausführen, **dadurch gekennzeichnet, dass** die erste Kommunikationsvorrichtung die Kommunikationsvorrichtung nach einem der Ansprüche 7 bis 9 ist und die zweite Kommunikationsvorrichtung die Kommunikationsvorrichtung nach einem der Ansprüche 10 bis 12 ist.

**Revendications**

1. Procédé d'émission de données, le procédé servant à émettre un numéro de trame et une phase de trame d'une trame de données d'interface radio commune publique, CPRI, en Ethernet, l'Ethernet comprenant un premier dispositif de communication et un deuxième dispositif de communication, le premier dispositif de communication et le deuxième dispositif de communication exécutant tous deux un protocole CPRI, le procédé étant **caractérisé en ce qu'**il comprend les étapes consistant à :

   sélectionner (110), par le premier dispositif de communication, une trame de données CPRI et convertir un numéro de trame de la trame de données CPRI sélectionnée en une valeur d'une seconde ;
   générer (120), par le premier dispositif de communication, un signal d'une impulsion par seconde, une phase du signal d'une impulsion par seconde étant une phase de trame de la trame de données CPRI sélectionnée ; la phase de trame de la trame de données CPRI sélectionnée étant un instant de début de la trame de données CPRI sélectionnée ;
   générer (130), par le premier dispositif de communication, un horodatage à partir du signal d'une impulsion par seconde et de la valeur d'une seconde ; et
   envoyer (130), par le premier dispositif de communication, au deuxième dispositif de communication, un message de synchronisation qui transporte l'horodatage, pour permettre au deuxième dispositif de communication d'obtenir le numéro de trame et la phase de trame de la trame de données CPRI sélectionnée en fonction de l'horodatage.

2. Procédé selon la revendication 1, dans lequel la conversion d'un numéro de trame de la trame de données CPRI sélectionnée en une valeur d'une seconde consiste à :
   convertir le numéro de trame de la trame de données CPRI sélectionnée en la valeur d'une seconde selon une formule $\text{compteur\_seconde} = \frac{(b \times k - m)}{k - 100 \times m} \times n$, où compteur_seconde est la valeur d'une seconde qui est obtenue après la conversion, n est le numéro de trame de la trame de données CPRI sélectionnée, $n = a \times (k - 100 \times m)$, k est un cycle de numéro de trame spécifié dans le protocole CPRI, a, b, k et m sont des entiers positifs, $m < k/100$ et $b > m/k$.

3. Procédé selon la revendication 1 ou 2, dans lequel
   le premier dispositif de communication est une unité de bande de base de bâtiment, BBU, et le deuxième dispositif de communication est une unité radio distante, RRU ; ou
   le premier dispositif de communication et le deuxième dispositif de communication sont tous deux des BBU.

4. Procédé d'émission de données, le procédé servant à émettre un numéro de trame et une phase de trame d'une trame de données d'interface radio commune publique, CPRI, en Ethernet, l'Ethernet comprenant un premier dispositif de communication et un deuxième dispositif de communication, le premier dispositif de communication et le deuxième dispositif de communication exécutant tous deux un protocole CPRI, le procédé étant **caractérisé en ce qu'**il comprend les étapes consistant à :

   recevoir (210), par le deuxième dispositif de communication, un message de synchronisation qui transporte un horodatage et qui est envoyé par le premier dispositif de communication, l'horodatage étant généré à partir d'un numéro de trame et d'une phase de trame d'une trame de données CPRI sélectionnée par le premier dispositif de communication ; la phase de trame de la trame de données CPRI sélectionnée étant un instant de début de la trame de données CPRI sélectionnée ; et
   déterminer (220), par le deuxième dispositif de communication, une valeur d'une seconde et un signal d'une impulsion par seconde qui correspondent à l'horodatage, déterminer le numéro de trame de la trame de données CPRI sélectionnée à partir de la valeur d'une seconde, et déterminer la phase de trame de la trame de données CPRI sélectionnée à partir du signal d'une impulsion par seconde.

5. Procédé selon la revendication 4, dans lequel la détermination du numéro de trame de la trame de données CPRI sélectionnée à partir de la valeur d'une seconde consiste
   utiliser une formule $n = (\text{compteur\_seconde} \times 100)\text{Mod}(k)$ pour calculer le numéro de trame de la trame de données CPRI sélectionnée par le premier dispositif de communication, où Mod est un symbole d'une opération modulo, n est le numéro de trame de la trame de données CPRI sélectionnée par le premier dispositif de communication, compteur_seconde représente la valeur d'une seconde, et k représente un cycle de numéro de trame spécifié dans le protocole CPRI.

6. Procédé selon la revendication 4 ou 5, comprenant également les étapes consistant à :

enregistrer (230) un instant t1 indiqué par l'horodatage, et enregistrer un instant t2 pour la réception du message de synchronisation ;
envoyer (240) un message de demande de retard au premier dispositif de communication, et enregistrer un instant t3 pour l'envoi du message de demande de retard ;
recevoir (250) un message de réponse de retard renvoyé par le premier dispositif de communication, le message de réponse de retard transportant un instant t4 pour la réception du message de demande de retard par le premier dispositif de communication, et enregistrer l'instant t4 ; et
calculer (260) un décalage de temps à partir des instants t1, t2, t3 et t4, et régler une horloge locale du deuxième dispositif de communication en fonction du décalage de temps, afin de le synchroniser avec le premier dispositif de communication.

7. Dispositif de communication, le dispositif étant utilisé en Ethernet, l'Ethernet comprenant le dispositif de communication et un autre dispositif de communication, le dispositif de communication et ledit un autre dispositif de communication exécutant tous deux un protocole d'interface radio commune publique, CPRI, le dispositif de communication étant **caractérisé en ce qu'**il comprend :

un processeur (510), configuré pour sélectionner une trame de données CPRI et convertir un numéro de trame de la trame de données CPRI sélectionnée en une valeur d'une seconde, et également configuré pour générer un message de synchronisation ;
un générateur de signal (520), configuré pour générer un signal d'une impulsion par seconde, une phase du signal d'une impulsion par seconde étant une phase de trame de la trame de données CPRI sélectionnée ; la phase de trame de la trame de données CPRI sélectionnée étant un instant de début de la trame de données CPRI sélectionnée ;
un circuit de génération d'horodatage (530), configuré pour générer un horodatage à partir du signal d'une impulsion par seconde et de la valeur d'une seconde, et ajouter l'horodatage au message de synchronisation ; et
un émetteur (540), configuré pour envoyer, au deuxième dispositif de communication, le message de synchronisation qui transporte l'horodatage, pour permettre au deuxième dispositif de communication d'obtenir le numéro de trame et la phase de trame de la trame de données CPRI sélectionnée en fonction de l'horodatage.

8. Dispositif de communication selon la revendication 7, dans lequel
le processeur (510) est spécifiquement configuré pour convertir le numéro de trame de la trame de données CPRI sélectionnée en une valeur d'une seconde selon une formule $compteur\_seconde = \frac{(b \times k - m)}{k - 100 \times m} \times n$, où compteur_seconde est la valeur d'une seconde qui est obtenue après la conversion, n est le numéro de trame de la trame de données CPRI sélectionnée, n = a $\times$ (k - 100 $\times$ m), k est un cycle de numéro de trame spécifié dans le protocole CPRI, a, b, k et m sont des entiers positifs, m < k/100 et b > m/k.

9. Dispositif de communication selon la revendication 7 ou 8,
le dispositif de communication étant une unité de bande de base de bâtiment, BBU, et ledit un autre dispositif de communication étant une unité radio distante, RRU ; ou
le dispositif de communication et ledit un autre dispositif de communication étant tous deux des BBU.

10. Dispositif de communication, le dispositif étant utilisé en Ethernet, l'Ethernet comprenant le dispositif de communication et un autre dispositif de communication, le dispositif de communication et ledit un autre dispositif de communication exécutant tous deux un protocole d'interface radio commune publique, CPRI, le dispositif de communication étant **caractérisé en ce qu'**il comprend :

un récepteur (610), configuré pour recevoir un message de synchronisation qui transporte un horodatage et qui est envoyé par ledit un autre dispositif de communication, l'horodatage étant généré à partir d'un numéro de trame et d'une phase de trame d'une trame de données CPRI sélectionnée par ledit un autre dispositif de communication ; la phase de trame de la trame de données CPRI sélectionnée étant un instant de début de la trame de données CPRI sélectionnée ; et
un processeur (620), configuré pour déterminer une valeur d'une seconde et un signal d'une impulsion par seconde qui correspondent à l'horodatage, rétablir le numéro de trame de la trame de données CPRI sélectionnée à partir de la valeur d'une seconde, et déterminer la phase de trame de la trame de données CPRI sélectionnée à partir du signal d'une impulsion par seconde.

11. Dispositif de communication selon la revendication 10, dans lequel
le processeur (620) est spécifiquement configuré pour utiliser une formule n = (compteur_seconde × 100)Mod(k) pour calculer le numéro de trame de la trame de données CPRI sélectionnée par ledit un autre dispositif de communication, où Mod est un symbole d'une opération modulo, n est le numéro de trame de la trame de données CPRI sélectionnée par ledit un autre dispositif de communication, compteur_seconde représente la valeur d'une seconde, et k représente un cycle de numéro de trame spécifié dans le protocole CPRI.

12. Dispositif de communication selon la revendication 10 ou 11, comprenant également :
un émetteur (630) et une mémoire (640), dans lequel dispositif l'émetteur (630) est configuré pour envoyer un message de demande de retard audit un autre dispositif de communication :

le récepteur (610) est également configuré pour recevoir un message de réponse de retard renvoyé par ledit un autre dispositif de communication, le message de réponse de retard transportant un instant t4 pour la réception du message de demande de retard par ledit un autre dispositif de communication ;
la mémoire (640) est configurée pour enregistrer un instant t1 indiqué par l'horodatage, enregistrer un instant t2 pour la réception du message de synchronisation, enregistrer un instant t3 pour l'envoi du message de demande de retard, et enregistrer l'instant t4 transporté dans le message de réponse de retard ; et
le processeur (620) est également configuré pour calculer un décalage de temps à partir des instants t1, t2, t3 et t4, et régler une horloge locale du dispositif de communication en fonction du décalage de temps, afin de le synchroniser avec ledit un autre dispositif de communication.

13. Système de communication Ethernet, le système comprenant un premier dispositif de communication et un deuxième dispositif de communication, le premier dispositif de communication et le deuxième dispositif de communication exécutant tous deux un protocole d'interface radio commune publique, CPRI, le système étant **caractérisé en ce que** le premier dispositif de communication est le dispositif de communication selon l'une quelconque des revendications 7 à 9, et **en ce que** le deuxième dispositif de communication est le dispositif de communication selon l'une quelconque des revendications 10 à 12.

A First communications device selects a CPRI data frame, and converts a frame number of the selected CPRI data frame into a value of a second      110

Generate a pulse per second signal, where a phase of the pulse per second signal is a frame phase of the selected CPRI data frame      120

Generate a timestamp according to the pulse per second signal and the value of a second, and send, to a second communications device, a synchronization message that carries the timestamp      130

FIG. 1

Master device          Slave device

Synchronization message (Sync)

t1

t2

Delay request message

t3

t4

Delay response message

Calculate a time offset, and adjust a clock

FIG. 2

| A second communications device receives a synchronization message that carries a timestamp and is sent by a first communications device | 210 |

| Determine a value of a second and a pulse per second signal that are corresponding to the timestamp, determine a frame number of a selected CPRI data frame according to the value of a second, and determine a frame phase of the selected CPRI data frame according to the pulse per second signal | 220 |

FIG. 3

| A second communications device receives a synchronization message that carries a timestamp and is sent by a first communications device | 210 |

| Determine a value of a second and a pulse per second signal that are corresponding to the timestamp, determine a frame number of a selected CPRI data frame according to the value of a second, and determine a frame phase of the selected CPRI data frame according to the pulse per second signal | 220 |

| Record a time t1 indicated by the timestamp, and record a time t2 for receiving the synchronization message | 230 |

| Send a delay request message to the first communications device, and record a time t3 for sending the delay request message | 240 |

| Receive a delay response message returned by the first communications device, where the delay response message carries a time t4 for receiving the delay request message by the first communications device, and record the time t4 | 250 |

| Calculate a time offset according to the times t1, t2, t3, and t4, and adjust a local clock of the second communications device according to the time offset, to synchronize with the first communications device | 260 |

FIG. 4

FIG. 5

FIG. 6a

610    640

Receiver    Memory    60

Processor    Transmitter

620    630

FIG. 6b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013100948 A
- CN 103404226